# EUROPÄISCHE PATENTSCHRIFT

(11) **EP 3 840 913 B1**
(45) Veröffentlichungstag und Bekanntmachung des Hinweises auf die Patenterteilung: **18.10.2023**
(21) Anmeldenummer: 19762296.2
(22) Anmeldetag: 09.08.2019
(51) Int. Cl.: B23K 33/00, B23K 5/00, B23K 5/06, B23K 5/24, B23K 31/02, B23K 37/02, B23K 37/04, B23K 101/18, B23K 103/04

(54) **VERFAHREN ZUM VERSCHWEISSEN VON BLECHSTREIFEN UND VORRICHTUNG ZUR HERSTELLUNG EINER GROSSEN FLÄCHE UNTER EINSATZ EINES DERARTIGEN VERFAHRENS**
METHOD FOR WELDING SHEET-METAL STRIPS AND DEVICE FOR PRODUCING A LARGE SURFACE USING A METHOD OF THIS TYPE
PROCÉDÉ DE SOUDAGE DE BANDES DE TÔLES ET DISPOSITIF POUR PRODUIRE UNE GRANDE SURFACE EN UTILISANT UN TEL PROCÉDÉ

(30) Priorität: 22.08.2018 DE 102018006603
(43) Veröffentlichungstag der Anmeldung: 30.06.2021
(73) Patentinhaber: Lipp & Mayer Technologie GmbH, 74076 Heilbronn (DE)
(72) Erfinder: MAYER, Edgar, 74076 Heilbronn (DE)
(74) Vertreter: Clemens, Gerhard
(86) Internationale Anmeldenummer: PCT/DE2019/000215
(87) Internationale Veröffentlichungsnummer: WO 2020/038504

(56) Entgegenhaltungen:
- EP-A1- 0 855 241
- EP-A2- 0 490 091
- DE-A1- 10 232 524
- DE-B- 1 168 218
- DE-C1- 3 739 359
- JP-A- S58 110 174
- US-A- 2 515 179
- US-A- 2 629 806
- Anonymous: "Solved: Can I create a V Groove at Sheet Metal fold line? - Autodesk Community- Inventor", , 24. Mai 2018 (2018-05-24), XP055640729, Gefunden im Internet: URL:https://forums.autodesk.com/t5/invento r-forum/can-i-create-a-v-groove-at-sheet-m etal-fold-line/td-p/5907839 [gefunden am 2019-11-08]

## Beschreibung

### TECHNISCHES GEBIET

Die vorliegende Erfindung betrifft ein Verfahren zum Verschweißen von Längsrandbereichen stumpf aneinanderstoßenden Blechstreifen.

Die vorliegende Erfindung betrifft weiterhin eine Vorrichtung zur Herstellung einer großen Fläche aus miteinander verschweißten Blechstreifen unter Einsatz eines derartigen Verfahrens.

### STAND DER TECHNIK

Aus der DE 37 39 359 C1 ist eine Schweißvorrichtung zum Herstellen einer zusammengesetzten Blechtafel bekannt. Die Blechtafeln weisen in ihrem Randbereich eine Aufkantung (Bördelung) auf. Dabei wird eine Elektrodenanordnung zum Erzeugen eines zwischen ihr und den zu verschweißenden Blechbahnen im Bereich von deren seitlich aufgestellten, übereinanderliegenden Bördeln brennenden Lichtbogens hergestellt. Die Elektrodenanordnung ist dabei an einem auf der Oberseite der Blechbahnen verlaufenden Schweißwagen angebracht, der zur Steuerung einer Laufrichtung mindestens ein Steuerelement aufweist, das an den eine ihm zugeordnete Führungsschiene bildenden Bördeln geführt ist.

An die Eigenschaft der Schweißverbindung zwischen den Blechbahnen sind dann besonders hohe Anforderungen zu stellen, wenn es sich um die Herstellung großflächiger membranartiger Flächen handelt. In besonderen Maße gilt dies, wenn die zu fertigenden Membranflächen für Verwendungszwecke vorgesehen sind, bei denen die Membranflächen hohen Zugspannungen ausgesetzt sind, wie beispielsweise bei Silobehältern mit großem Durchmesser, bei denen die Membranflächen als oberseitige Abdeckungen eingesetzt werden, was beispielsweise in der G 87 04 454.4 beschrieben ist. Derartige membranartige Abdeckungen sind auch beispielsweise durch in der deutschen Patentanmeldung P 37 09 843.8 beschrieben.

Bei der Herstellung derartiger Abdeckungen ist es besonders vorteilhaft, wenn bei der Bildung der Naht zwischen den aneinander grenzenden Blechbahnen die Aufkantungen beim Schweißen bis auf das Niveau der Ebene der Oberseite der Blechbahnen abgeschmolzen werden. Die Durchführung des Schweißvorgangs in der Weise, dass die Aufkantungen durch Abschmelzungen beseitigt werden, führt im Wesentlichen zu einer annähernd glattflächigen Oberseite der zusammengesetzten Blechstreifen und zu einer Ausbildung einer Schweißnaht mit besonders vorteilhaften Eigenschaften. Die dabei entstehende Naht, die sich durchgehend von der Oberseite der Membranfläche bis zu deren Unterseite erstreckt, gibt besonders gute Festigkeitswerte.

In der DE 195 29 542 A1 ist ein Verfahren und eine Vorrichtung zum Verschweißen von stumpf aneinanderstoßenden Blechen, insbesondere von Streifen dargestellt. Dieses Verfahren geht von der Kenntnis aus, dass bei dicken Blechen die bekannten üblichen Verfahren, bei denen in eine von den stumpf aneinanderstoßenden Blechen gebildete V-artige Nut eine Schweißnaht gelegt wird, bei dünnen Blechen, insbesondere bei Blechen von weniger als 1 mm Dicke, jedoch nicht anwendbar ist. Bei dünnen Blechen werden deshalb die zu verbindenden Randstreifen hochgestellt, beispielsweise durch Aufkantungen, und danach deren Höhen soweit reduziert, dass der verbleibende Stumpf beim Verschweißen beispielsweise mittels Elektroden in die Schweißnaht eingeht. Dabei ist es jedoch äußerst schwierig eine beidseitig mit der Blechoberfläche abschließende Schweißnaht zur erhalten. In der DE 195 29 542 A1 wird daher ein Verfahren zum Verschweißen stumpf aneinanderstoßender, dünner Bleche, insbesondere in Form von Streifen, offenbart, das sich dadurch auszeichnet, dass die beiden zu verschweißenden Bleche mit sich überlappenden Randbereichen nebeneinander aneinander gelegt werden, von den sich überlappenden Randbereichen mit aufeinander ausgerichteten Schnittlinien Endzonen abgeschnitten werden, die Schnittflächen beider Bleche in stumpfe Anlage aneinander gebracht werden und anschließend vorzugsweise mittels eines Laserstrahls längs der Stoßlinie miteinander verschweißt werden.

Auch bei diesem Verfahren ist es so, dass aufgrund der im Schweißbereich vorhandenen Materialstärke Schweißnähte entstehen, die eine relativ große Dicke aufweisen. Derartige Schweißnähte sind jedoch, insbesondere bei Behältern, nicht gewünscht, da eine möglichst glatte Oberfläche angestrebt wird.

### DARSTELLUNG DER ERFINDUNG

Ausgehend von dem genannten Stand der Technik liegt der vorliegenden Erfindung das technische Problem beziehungsweise die Aufgabe zugrunde, ein Verfahren und eine Vorrichtung zum Verschweißen stumpf aneinanderstoßender Bleche zu schaffen, das beziehungsweise die sich für Blechstreifen, insbesondere sehr dünne membranartige Bleche, eignet, eine einfache und wirtschaftliche Herstellung gewährleistet und eine Schweißnaht mit geringer Dicke ergibt, die eine glatte Oberfläche ermöglicht und dauerhafte und zuverlässige Festigkeits- und Dichtigkeitsstandards gewährleistet.

Das erfindungsgemäße Verfahren zum Verschweißen von Längsrandbereichen stumpf aneinanderstoßenden Blechstreifen ist durch die Merkmale des unabhängigen Anspruchs 1 gegeben. Die erfindungsgemäße Vorrichtung zur Herstellung einer Fläche aus miteinander verschweißten Blechstreifen ist durch die Merkmale des unabhängigen Anspruchs 15 gegeben. Vorteilhafte Ausgestaltungen und Weiterbildungen sind Gegenstand der von dem unabhängigen Anspruch 1 beziehungsweise 15 direkt oder indirekt abhängigen Verfahrens- beziehungsweise Vorrichtungsansprüche.

Das erfindungsgemäße Verfahren ist gekennzeichnet mit folgenden Verfahrensschritten:
- Herstellen einer Sicke oder Nut mit einem vorgegebenen Abstand parallel zum Längsrand jedes Blechstreifens.
- Herstellen einer Aufkantung entlang dem jeweiligen Längsrand des Blechstreifens, wobei die Querschnittslänge der Aufkantung im Wesentlichen dem Abstand der Sicke/ Nut entspricht.
- Aneinanderfügen der Aufkantungen benachbarter Blechstreifen.
- Verschmelzen der aneinander gefügten Aufkantungen benachbarter Blechstreifen mittels in Längsrichtung der Blechstreifen voranschreitender Schweißung unter Einsatz eines Schweißkopfes ohne Einsatz von zusätzlichem Schweißmaterial.

Durch das Vorsehen einer Sicke/Nut im Bereich der Position, um die die Aufkantung jeweils gekantet wird, wird das zu verschmelzende Material reduziert, wodurch eine Schweißnaht beim Verschmelzen erzeugt werden kann, die weniger Material beinhaltet und daher keinen großen Überstand nach Fertigstellung der Schweißnaht ergibt und somit eine glatte Oberfläche vorhanden ist. Weiterhin werden durch die Materialreduzierung durch die Sicke/Nut Materialverwerfungen und -verziehungen der miteinander verschweißten Blechstreifen deutlich reduziert, so dass die aus derartig verschweißten Blechstreifen hergestellte Fläche insgesamt weniger Krümmungen und Wellen, die beim Schweißvorgang aufgrund der unterschiedlichen Temperaturen normalerweise entstehen, aufweist.

Eine besonders wirtschaftliche Umsetzung des erfindungsgemäßen Verfahrens zeichnet sich dadurch aus, dass die Sicke/Nut durch Kaltverformungen hergestellt wird, wobei in bevorzugter Art und Weise die Sicke/ Nut durch ein Stempel- oder Walzverfahren hergestellt werden kann.

Alternativ kann in einer vorteilhaften Art und Weise die Sicke / Nut durch Materialabtragung hergestellt werden, beispielsweise durch Fräsung, Spanabhebung oder in anderer materialabtragender Art und Weise.

Die Sicke/Nut kann ober- und/ oder unterseitig angebracht werden.

Eine besonders bevorzugte Ausgestaltung, die den konstruktiven Gegebenheiten in der Praxis Rechnung trägt und wirtschaftlich umzusetzende Lösungen mit einer dauerhaften zuverlässigen Funktion gewährleistet, zeichnet sich dadurch aus, dass die Sicke / Nut in einem Abstand vom Längsrand des Blechstreifens angebracht wird, der der 3 bis 10-fachen, insbesondere der 2 bis 5-fachen, Stärke des Blechstreifens entspricht. Die Aufkantung wird bevorzugt rechtwinklig zur Blechebene hergestellt.

Im Rahmen des erfindungsgemäßen Verfahrens können Blechstreifen eingesetzt werden, deren Dicke beziehungsweise Stärke im Bereich von 0,5 bis 3 mm, insbesondere von 0,5 bis 2 mm, liegt. Als Material für die Blechstreifen wird bevorzugt Edelstahl eingesetzt, das auch aggressiven Umweltbedingungen auf Dauer standhält und hohe Festigkeiten gewährleistet.

Eine besonders bevorzugte Ausgestaltung, die eine hohe Qualität der erzeugten Schweißnaht gewährleistet, zeichnet sich dadurch aus, dass der Schweißkopf während des Verfahrens in Längsrichtung beim Schweißvorgang eine oszillierende beziehungsweise pendelnde Bewegung quer zur Längsrichtung durchführt.

Im Rahmen eines wirtschaftlichen Einsatzes und bei gleichzeitiger Gewährleistung einer hohen Qualität der herzustellenden Schweißnaht zeichnet sich eine besonders vorteilhafte Ausgestaltung dadurch aus, dass zum Verschmelzen der aneinander gefügten Aufkantungen ein Schweißbrenner, eine Schweißelektrode oder ein Laserschweißer eingesetzt wird.

Um ein Verziehen der durch die miteinander zu verschweißenden Blechstreifen entgegen zu wirken, insbesondere während des Herstellungsprozesses beim Verschweißen, hat es sich als besonders vorteilhaft herausgestellt, dass Verfahren derart auszugestalten, dass die benachbarten zu verschweißenden Längsrandbereiche der Blechstreifen in Längsrichtung beabstandet vor der Verschweißposition mit einem vorgegebenen Spaltmaß zunächst auseinander gehalten werden und die Aufkantungen unmittelbar vor der Verschweißposition aneinander gedrückt werden.

Eine besonders vorteilhafte Ausgestaltung des Verfahrens zeichnet sich dadurch aus, dass unmittelbar unterhalb und in Kontakt mit den zu verschweißenden Längsrandbereichen der Blechstreifen eine wärmeleitende Materialschicht angeordnet wird.

Das erfindungsgemäße Verfahren ist auch dazu geeignet, dünne, membranartige Blechstreifen zuverlässig miteinander zu verbinden.

Die erfindungsgemäße Vorrichtung zur Herstellung einer Fläche aus miteinander im längsseitigen Bereich verschweißten Blechstreifen unter Einsatz des oben genannten Verfahrens ist in Vorrichtungsanspruch 15 offenbart.

Eine besonders bevorzugte Ausgestaltung der erfindungsgemäßen Vorrichtung zeichnet sich dadurch aus, dass eine weitere Lagerrolleneinrichtung vorhanden ist, die die von der weiteren Abzugseinrichtung abgezogenen, verschweißten Blechstreifen aufnimmt.

Eine besonders vorteilhafte Weiterbildung der erfindungsgemäßen Vorrichtung zeichnet sich dadurch aus, dass eine Vorspanneinrichtung vorhanden ist, die die jeweils zwei miteinander zu verschweißenden Blechstreifen während des Verschweißvorgangs unter Vorspannung hält.

Eine konstruktiv besonders effektive Ausgestaltung zeichnet sich dadurch aus, dass eine an die Schweißeinrichtung gekoppelte Spalterzeugungseinrichtung vorhanden ist, die in Längsrichtung beabstandet vor der Schweißeinrichtung einen definierten Spaltabstand zwischen den zu verschweißenden zwei Blechstreifen erzeugt.

Eine bevorzugte Weiterbildung zeichnet sich dadurch aus, dass die Auflagereinrichtung eine Wärmeleitschiene, insbesondere aus Kupfer, enthält, die unmittelbar unterhalb der Längsrandbereiche der zu verschweißenden Blechstreifen angeordnet ist und auf der Längsrandbereiche während des Schweißvorgangs gelagert sind.

Eine qualitativ hochwertige Schweißnaht lässt sich gemäß einer vorteilhaften Ausgestaltung dadurch erzielen, dass der Schweißkopf der in Längsrichtung verfahrbaren Schweißeinrichtung konstruktiv so ausgebildet/ gelagert ist, dass er während des Schweißvorgangs eine oszillierende oder pendelnde Bewegung quer zur Längsrichtung durchführt.

Eine besonders bevorzugte Ausgestaltung zeichnet sich dadurch aus, dass die Schweißeinrichtung zwei gegenüberliegende Anpressrollen aufweist, die die Aufkantungen zweier beabstandeter Blechstreifen vor der Verschweißposition aneinander presst.

Mit dem erfindungsgemäßen Verfahren beziehungsweise der erfindungsgemäßen Vorrichtung ist eine wirtschaftliche Herstellung von Überspannungen, aufliegenden Dach- oder Bodenkonstruktionen in beliebiger Form möglich. Dabei können die hergestellten Flächen auch als Böden, Sonnenschutz, Sichtschutz oder dergleichen Abdeckungen ausgebildet sein. Insbesondere die Herstellung freitragender leichter Konstruktionen, insbesondere aus Edelstahl wird ermöglicht, die es erlaubt, beispielsweise Behälter oder Silos mit einer Spannweite bis 50 m frei zu überspannen. Die Leichtbauweise eignet sich auch für das Verschließen von Behältern mit flüchtigen und explosiven Stoffen.

Die erfindungsgemäße Konstruktion bietet viele Vorteile, beispielsweise Korrosionsbeständigkeit, Diffusionsdichtigkeit für Gas, Unempfindlichkeit gegen UV-Bestrahlung. Es sind keine kostenintensive Schweißarbeiten vor Ort erforderlich. Die Konstruktion ist geeignet für Stahl- und Betonbehälter und ebenso ist eine nachträgliche Montage problemlos möglich.

Eine konstruktiv besonders einfache Ausgestaltung der erfindungsgemäßen Vorrichtung zeichnet sich dadurch aus, dass die Schweißeinrichtung einen Exzenterantrieb für die Durchführung der oszillierenden oder pendelnden Bewegung des Schweißkopfes quer zur Längsrichtung während des Schweißvorgangs aufweist.

Das erfindungsgemäße Verfahren beziehungsweise die erfindungsgemäße Vorrichtung ist besonders geeignet freitragende Konstruktionen, insbesondere Membrankonstruktionen, mit beliebiger Flächenumfangskontur herzustellen. Darüber hinaus können die verschweißten Blechstreifen auch als aufliegende Dach- oder Bodenkonstruktion eingesetzt werden. Insoweit ist das erfindungsgemäße Verfahren und die erfindungsgemäße Vorrichtung universal einsetzbar für Flächen aus miteinander verschweißten Blechstreifen, die eine beliebige Umfangskontur aufweisen können und die jeweiligen Einsatzzweck problemlos angepasst werden können, wobei gleichzeitig eine hohe Tragfähigkeit, eine dauerhaft zuverlässige Funktion und ein nahe wartungsfreier Einsatz gewährleistet werden kann.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a-e: schematischer Querschnitt durch ein Blechstreifen (Fig. 1a) bei dem beanstandet zum Längsrand beidseitig jeweils eine Nut eingeprägt wird (Fig. 1b), beide Längsrandbereiche umgekantet werden, so dass jeweils eine Aufkantung entsteht (Fig. 1c), zusammenfügen zweier benachbarter Längsrandbereiche von Blechstreifen unter Einwirkung eines Schweißkopfes zum Verschmelzen der Aufkantungen zur Ausbildung einer Schweißnaht (Fig. 1d), Darstellung der durch die gebildete Schweißnaht stumpf verbundenen benachbarten Blechstreifen (Fig. 1e),
- Fig. 2: schematische Draufsicht auf eine Fläche, insbesondere Membranfläche, bestehend aus einer Vielzahl in ihrem Längsrandbereich stumpf miteinander verschweißten Blechstreifen gemäß der Detail- Darstellung in Fig. 1e als Dachabdeckung für ein Rundsilo,
- Fig. 3: schematischer Querschnitt durch ein Rundsilo mit einer Dachabdeckung mit einer Membranfläche gemäß Fig. 2,
- Fig. 4: schematische Draufsicht auf eine Vorrichtung zum Herstellen einer Fläche aus insbesondere membranartigen, miteinander verschweißten Blechstreifen,
- Fig. 5: schematische Perspektivdarstellung der Vorrichtung gemäß Fig. 4,
- Fig. 6: schematische Perspektivdarstellung einer Schweißeinrichtung, die als Schweißwagen ausgebildet ist und innerhalb der Vorrichtung gemäß Fig. 5 während des Verschweißvorgangs zweier benachbarter Blechstreifen mit Aufkantung, eingesetzt wird,
- Fig. 7: schematische Seitenansicht quer zur Längsrichtung der auf zwei Blechstreifen angeordneten Schweißeinrichtung gemäß Fig. 6,
- Fig. 8: schematische Stirnansicht entgegen der Längsrichtung auf die Schweißeinrichtung gemäß Fig. 6,
- Fig. 9: schematische Detailansicht der Schweißeinrichtung gemäß Fig. 8 von Detail A,
- Fig. 10: schematische, ausschnittsweise Perspektivdarstellung der Vorrichtung gemäß Fig. 5 mit Darstellung der Lagerrolleneinrichtung, der Abzugseinrichtung und der ersten und zweiten Formeinrichtung, beide in Form von Rollen,
- Fig. 11: schematische Stirnansicht in Längsrichtung der Vorrichtung gemäß Fig. 10,
- Fig. 12: schematische Seitenansicht quer zur Längsrichtung der Vorrichtung gemäß Fig. 10 und
- Fig. 13: schematische Draufsicht auf die Vorrichtung gemäß Fig. 10.

### WEGE ZUM AUSFÜHREN DER ERFINDUNG

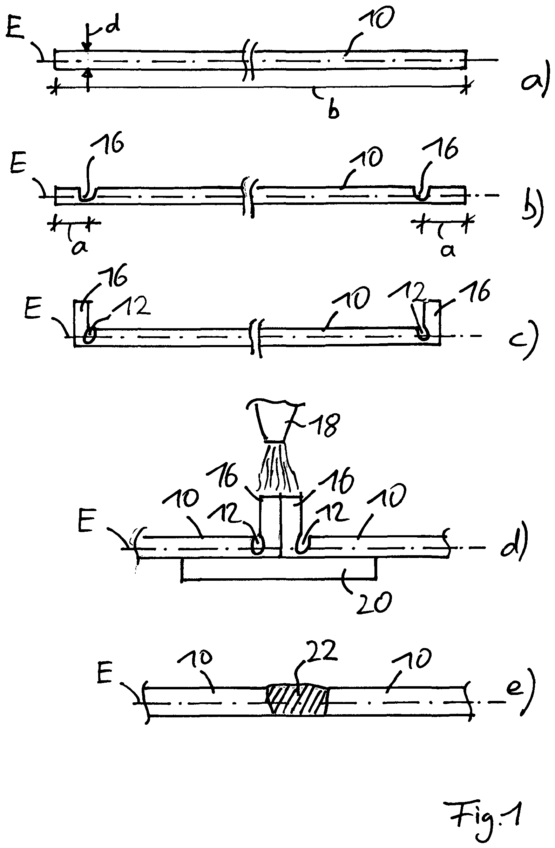

In den Figuren 1a bis e sind stark schematisiert einzelne Verfahrensschritte zum Verschweißen benachbarter, insbesondere dünner, membranartiger, Blechstreifen 10 dargestellt. Ausgehend von einem Blechstreifen 10 gemäß Fig. 1a, der eine Dicke d aufweist, die beispielsweise 0,5 bis 3 mm beträgt, und eine Breite b aufweist von beispielsweise 500 bis 2000 mm. Die Blechebene ist mit dem Bezugszeichen E versehen und als strichpunktierte Linie dargestellt.

In einem ersten Verfahrensschritt wird im Abstand a vom jeweiligen Längsrand 14 des Blechstreifens 10 eine oberseitige Nut 12 eingeprägt, die parallel zum Längsrand 14 verläuft. Die Nut 12 kann beispielsweise V-oder U-förmig ausgebildet sein. Die Nut 12 kann beispielsweise durch Kaltverformung in einem Walz- oder Stempelverfahren eingeformt werden. Die Tiefe der Nut 12 liegt bevorzugt im Bereich zwischen 50 bis 80 % der Dicke d des Blechstreifens 10. Bei dünnen Blechen 12 ist auch eine Abkantung ohne Nut möglich.

Im nächsten Verfahrensschritt wird der Längsrandbereich zwischen der Nut 12 und dem Längsrand 14 nach oben aufgekantet, so dass beidseitig jeweils eine Aufkantung 16 gebildet wird, die im Wesentlichen im Ausführungsbeispiel rechtwinklig zur Ebene E des Blechstreifens 10 angeordnet ist (Fig. 1c).

Zum Verbinden zweier Blechstreifen 10 werden diese aneinander gefügt, so dass die Aufkantungen 16 benachbarter Blechstreifen 10 miteinander zur Auflage kommen. Dann werden die Aufkantungen 16 mittels eines Schweißkopfes 18 bis zur Schmelztemperatur erhitzt, so dass diese miteinander verschmelzen und im Endzustand eine Schweißnaht 22 bilden, die benachbarte Blechstreifen 10 entlang ihres Längsrandbereichs miteinander verbindet. Die Schweißnaht 22 ist dabei so ausgebildet, dass sie eine nahezu glatte Oberfläche mit den Oberseiten der anschließenden Blechstreifen 10 bildet.

Dadurch, dass vor dem Schweiß- beziehungsweise Schmelzvorgang eine Nut 12 eingebracht wird, reduziert sich das Materialvolumen, das miteinander verschmolzen werden muss, um die Schweißnaht 22 herzustellen. Dadurch reduziert sich der Energieeintrag zum Herstellen der Schweißnaht 22, so dass ein geringer Schweißverzug auftritt und das Volumen der Schweißnaht 22 zum Erzeugen einer glatten Oberfläche reduziert wird.

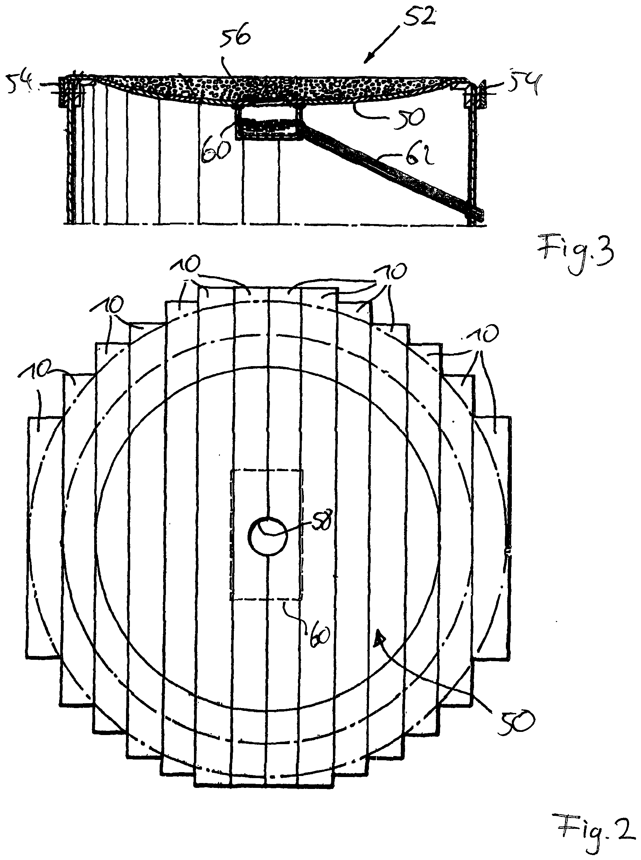

Die Fig. 3 zeigt ein Rundsilo 52, bei dem die Membranfläche 50 gemäß Fig. 2 als Dachabdeckung eingesetzt wird. Nachdem die Membranfläche 50 in die runde Umfangskontur geschnitten ist, kann diese problemlos auf den Rundsilo 52 angebracht werden, indem sie über Spanneinrichtungen 54 im oberen umlaufenden Randbereich der Wandung des Rundsilos 52 verspannt wird. Die Membranfläche 50 steht dabei unter Zugspannung und weist eine geringe Durchbiegung auf. Oberseitig ist die Membranfläche 50 mit einer Kiesauffüllung 56 versehen.

In der Mitte der Membranfläche 50, das heißt am tiefsten Punkt der Fläche ist ein Ablauf 58 mit einer Ablaufkammer 60 und einer Ablaufleitung 62 zur Ableitung von Regenwasser vorhanden.

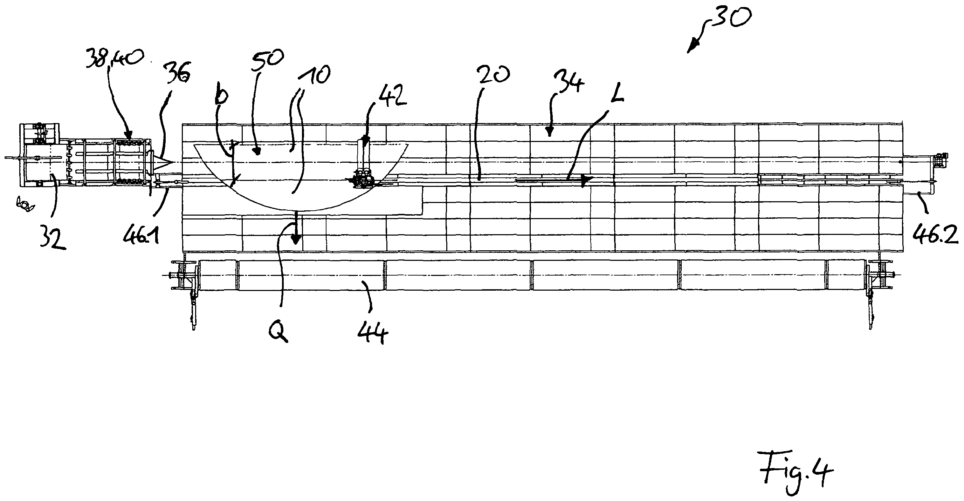

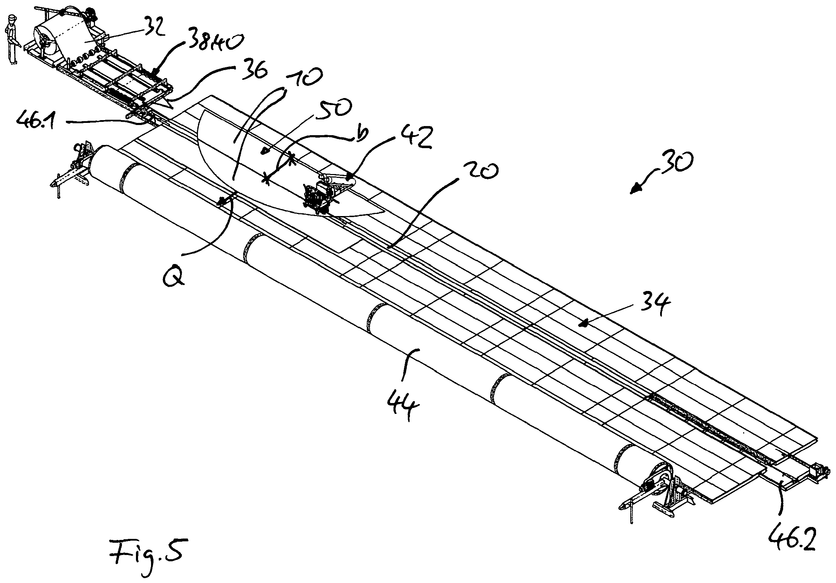

In den Figuren 4 und 5 ist eine Vorrichtung 30 zum Herstellen einer tragenden Fläche, insbesondere Membranfläche 50, aus miteinander verschweißten Blechstreifen 10 unter Einsatz des oben beschriebenen Verfahrens schematisch dargestellt. Dabei ist die Situation dargestellt, in der die ersten beiden Blechstreifen 10 der Membranfläche 50 miteinander verschweißt werden.

Im in Fig. 4 linken Endbereich ist eine Lagerrolleneinrichtung 32 angeordnet, auf der ein Blechstreifen 10 als Coil abziehbar gelagert ist. Der Blechstreifen 10 wird mittels einer ersten Abzugseinrichtung 36 auf eine Auflagereinrichtung 34 bis zu einer vorgegebenen Länge in Längsrichtung L abgezogen. In Längsrichtung L nach der Lagerrolleneinrichtung 32 ist eine in Fig. 4 schematisch dargestellte erste Formeinrichtung 38 vorhanden, die im beidseitigen Randbereich des abgezogenen Blechstreifens 10 eine Nut einprägt. Daran anschließend folgt die schematisch dargestellte zweite Formeinrichtung 40, die die Aufkantung im beidseitigen Randbereich des abgezogenen Blechstreifens herstellt, wobei die Biegekante der Aufkantung 16 in der Nut 12 liegt. Nach dem Erreichen der vorgegebenen Abzugslänge und dem Einprägen der Nut 12 und der Aufkantung 16 durch die erste und zweite Formeinrichtung 38, 40 wird der Blechstreifen 10 von der von der ersten Lagerrolleneinrichtung 32 kommenden Blechbahn abgetrennt.

Nach dem Abzug des ersten Blechstreifens 10 wird dieser nach Erreichen seiner Längsposition in Querrichtung Q durch eine nicht näher dargestellte weitere Abzugseinrichtung um das Breitenmaß b des Blechstreifens 10 abgezogen. Nachdem ein zweiter Blechstreifen 10 eingezogen ist, kommt die Schweißeinrichtung 42 zum Einsatz, die die Aufkantungen 16 benachbarter Blechstreifen 10 aufschmilzt und damit miteinander verschweißt. Die Schweißeinrichtung 42 fährt dabei in Längsrichtung L fortschreitend voran, wobei nachdem eine gewisse Schweißnahtlänge erreicht ist damit begonnen wird, die Umfangskontur der Membranfläche 50 - im dargestellten Ausführungsbeispiel eine Kreisumfangskontur - entsprechend von den Blechstreifen 10 abgeschnitten wird, wie in Fig. 4 dargestellt. Während des Schweißvorgangs werden die zwei miteinander zu verschweißenden Blechstreifen 10 mit Hilfe der am linken und rechten Endbereich der Auflagereinrichtung 34 vorhandenen Vorspanneinrichtungen 46.1, 46.2 unter Vorspannung gehalten.

Nachdem die beiden Blechstreifen 10 miteinander verschweißt sind, werden diese mit der weiteren Abzugseinrichtung in Querrichtung Q abgezogen und einer weiteren Lagerrolleneinrichtung 44 zugeführt, und auf diese aufgewickelt. Die weitere Lagerrolleneinrichtung 44 dient als Transportvorrichtung für die fertig gestellte Membranfläche 50 zum Transport auf die Baustelle. Im weiteren Verfahrensschritten werden nun jeweils weitere Blechstreifen 10 abgezogen mit Nuten und Aufkantungen versehen und in ihrem Längsrandbereich miteinander verschweißt, bis die fertige Membranfläche 50 hergestellt ist. Im fertigen Zustand ist die Membranfläche 50 dann auf die weitere Lagerrolleneinrichtung 44 aufgewickelt und kann zur Baustelle transportiert werden.

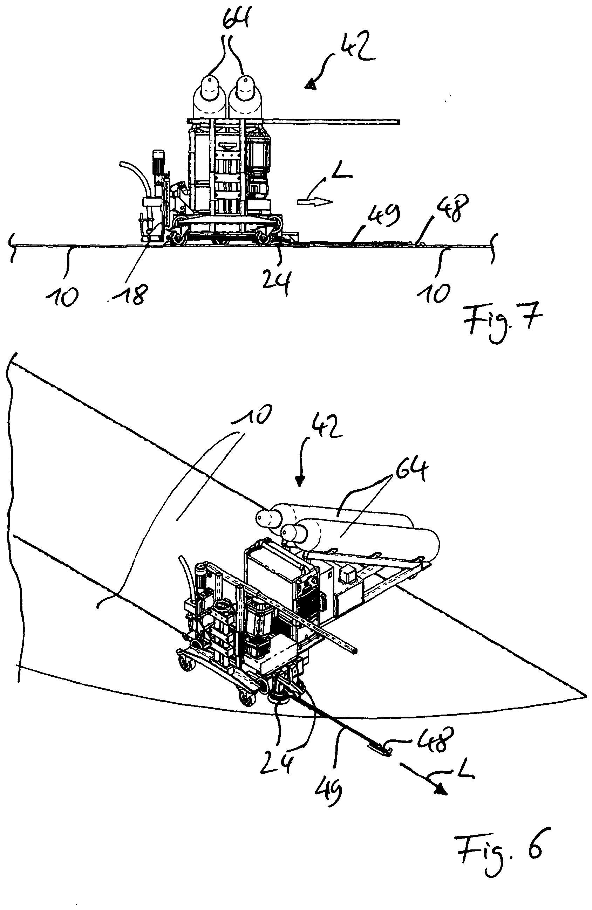

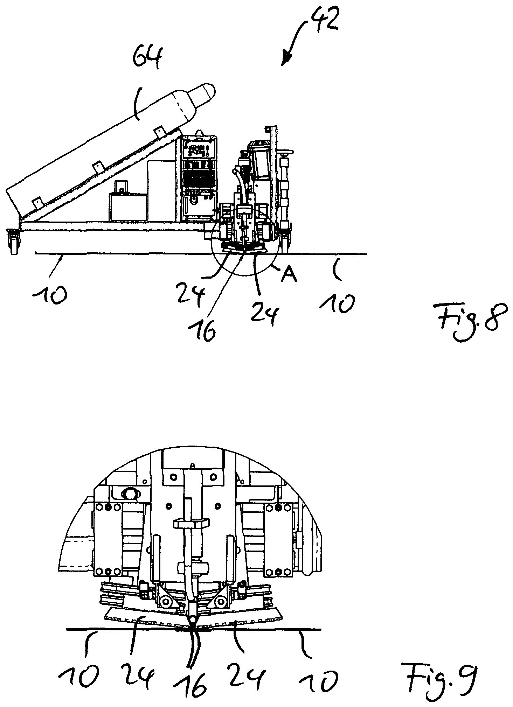

In den Figuren 6 bis 9 ist schematisch ein Ausführungsbeispiel einer Schweißeinrichtung 42 beim Verschweißvorgang dargestellt. Die Schweißeinrichtung 42 ist auf einem in Längsrichtung L verfahrenbaren Schweißwagen angeordnet, der einen autonomen Antrieb besitzt. Die Schweißeinrichtung 42 weist in ihrem vorderen Endbereich zwei gegenüberliegenden Anpressrollen 24 auf, die im Einsatzfall von außen her jeweils auf die benachbarten Aufkantungen 16 benachbarter Blechstreifen 10 pressend einwirken und um eine Drehachse drehbar angetrieben werden und damit die Fahrbewegung des Fahrwagens der Schweißeinrichtung 42 in Längsrichtung L ermöglichen. Der in Fig. 7 zu sehende Schweißkopf 18 der Schweißeinrichtung 42 ist im hinteren Endbereich der Schweißeinrichtung 42 vorhanden. Die Schweißeinrichtung 42 ist im Ausführungsbeispiel als Schutzgasschweißeinrichtung ausgebildet, das heißt dem Schweißkopf 18 werden aus Vorratsbehältern 64 Gase zugeführt, um durch deren Verbrennung die Aufschmelzung der Aufkantungen 16 der Blechstreifen 10 zu bewirken um damit die gewünschte Schweißnaht zu erzeugen.

Weiterhin ist aus Fig. 6 ersichtlich, dass in Längsrichtung L beanstandet vor den Anpressrollen 24 eine über ein Abstandsprofil 49 mit der Schweißeinrichtung 42 verbundene Spalterzeugungseinrichtung 48 angeordnet ist, die bewirkt, dass die benachbarten Randbereiche der Blechstreifen 10 auf einem definierten Spaltmaßabstand halten werden, so dass es zu keinen Überwerfungen der membranartigen Blechstreifen 10 während des Schweißvorgangs kommen kann, was einem störungsfreien Ablauf des Verfahrens zu Gute kommt. Die Aufkantungen 16 benachbarter Blechstreifen 10 werden durch die Anpressrollen 24 der Schweißeinrichtung 42 kontaktierend zusammengeführt und anschließend aufgeschmolzen zur Ausbildung der Schweißnaht.

Der Schweißkopf 18 der Schweißeinrichtung 42 ist konstruktiv so ausgestaltet beziehungsweise gelagert, dass er während des Vorschubs der Schweißeinrichtung 42 in Längsrichtung L eine oszillierende oder pendelartige Bewegung quer zur Längsrichtung L durchführt, wodurch die Qualität der hergestellten Schweißnaht deutlich verbessert wird. Zum Umsetzen dieser oszillierenden beziehungsweise pendelartigen Bewegung kann beispielsweise ein Exzenterantrieb für den Schweißkopf 18 eingesetzt werden.

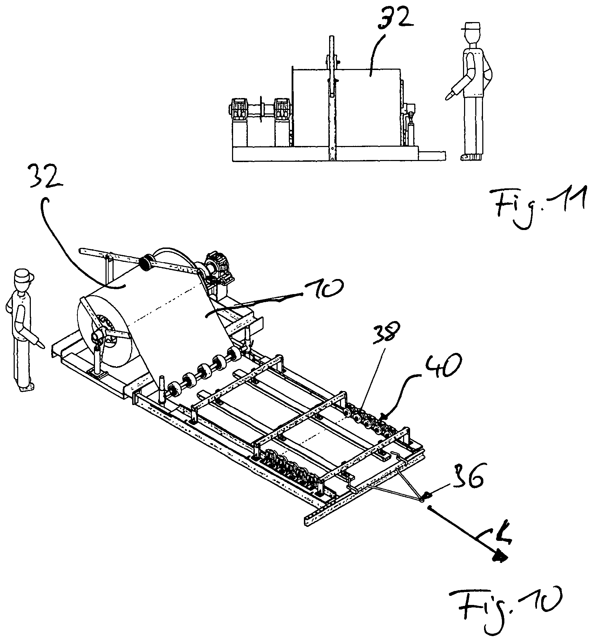

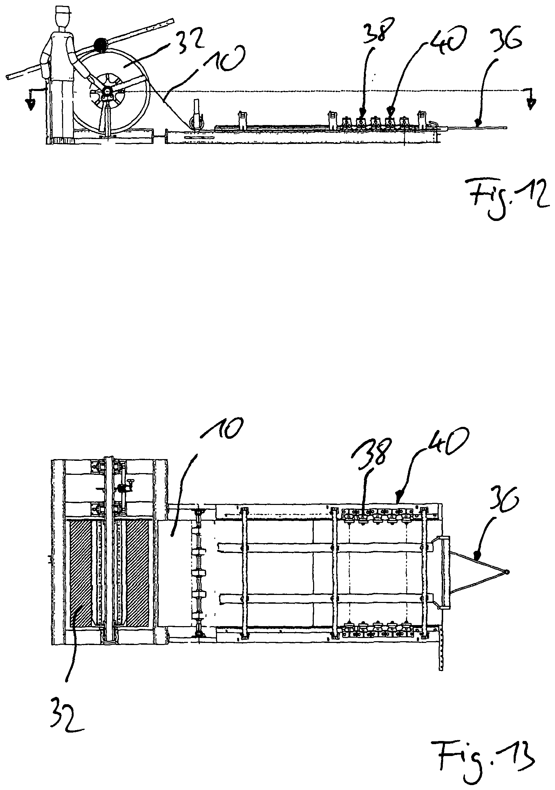

Die Figuren 10 bis 13 zeigen schematisch den vorderen Bereich der Vorrichtung 30.

Der jeweilige Blechstreifen 10 ist auf eine Lagerrolleneinrichtung 32 drehbar abziehbar aufgewickelt vorhanden, die üblicherweise Coil genannt wird.

Die Abzugseinrichtung 36, die jeweils im vorderen Endbereich eines abzuziehenden Blechstreifens 10 mit diesem verbunden wird, zieht diesen Blechstreifen in Längsrichtung L auf die Auflagereinrichtung 34 bis zu einer vorgegebenen Länge ab. Beim Abzugsvorgang wir der Blechstreifen 10 einer ersten Formeinrichtung 40 zugeführt, die im dargestellten Ausführungsbeispiel als Rolleneinheit ausgebildet ist und die entsprechende Nut 12 im jeweiligen Seitenrandbereich auf den Blechstreifen 10 oberseitig einprägt. An die erste Formeinrichtung 38 schließt unmittelbar die zweite Formeinrichtung 40 an, die im dargestellten Ausführungsbeispiel aus mehreren in Längsrichtung L hintereinander angeordneten Rollen besteht, und die die Aufkantung 16 im Randbereich des Blechstreifens 10 vornimmt. Dieser vorgekantete Blechstreifen 10 wird dann, nachdem er die jeweils vorgegebene Auszugslänge auf der Auflagereinrichtung 34 erreicht hat, mittels der oben beschriebenen Schweißeinrichtung 42 miteinander stumpf verschweißt, wobei beim Verschweißvorgang die Aufkantungen 16 aufgeschmolzen werden und dadurch eine dauerhaft zuverlässige dichte Schweißnaht mit hoher Tragfähigkeit erzeugt wird.

Nachdem beim jeweiligen Abziehvorgang der Blechstreifen die vorgegebene Abzugslänge erreicht wird, wird dieser von dem Coil abgetrennt und anschließend verschweißt. Nachdem die Verschweißung stattgefunden hat, werden die miteinander verschweißten Blechstreifen 10 in Querrichtung Q um die jeweilige Blechbreite b abgezogen und der weiteren Lagerrolleneinrichtung 44 zugeführt. Danach wird ein weiterer Blechstreifen 10 abgezogen und für den nächsten Schweißvorgang zur Verfügung gestellt. Durch dieses Verfahren können beliebig große Flächen aus Blechstreifen hergestellt werden, die eine beliebige Umfangskontur aufweisen, da die Umfangskontur bereits beim Schweißvorgang durch entsprechende Konturbehandlung der Randbereiche der aneinander gefügten Blechstreifen entsteht.

Durch das erfindungsgemäße Vorsehen einer Nut oder Sicke wird das Volumen des aufzuschmelzenden Materials zur Bildung einer Schweißnaht reduziert, so dass ein geringerer Energieeintrag ermöglicht wird, und dadurch dem Auftreten von Verziehungen oder Wellenbildungen der tragenden Fläche effektiv entgegen gewirkt wird. Darüber hinaus lassen sich Schweißnähte mit geringerer Dicke erzielen, so dass insgesamt eine glatterer Oberfläche erzielt werden kann. Auch der Entstehung nicht gewünschter Eigenspannungen innerhalb der Fläche wird dadurch entgegen gewirkt. Bei besonders dünnen Blechstreifen, ist die Anwendung des erfinderischen Verfahrens nicht notwendig und es kann auf die Herstellung einer Nut verzichtet werden und die übrigen Verfahrensschritte entsprechend angewandt werden.

## Patentansprüche

1. Verfahren zum Verschweißen von Längsrandbereichen stumpf aneinanderstoßenden Blechstreifen (10) mit folgenden Verfahrensschritten:
- Herstellen einer Aufkantung (16) entlang dem jeweiligen Längsrand (14) des Blechstreifens (10),
- Aneinanderfügen der Aufkantungen (16) benachbarter Blechstreifen (10),
- Verschmelzen der aneinander gefügten Aufkantungen (16) benachbarter Blechstreifen (10) mittels in Längsrichtung (L) der Blechstreifen (10) voranschreitender Schweißung unter Einsatz eines Schweißkopfes (18) ohne Einsatz von zusätzlichem Schweißmaterial, **dadurch gekennzeichnet, dass** eine Sicke oder Nut mit einem vorgegebenen Abstand (a) parallel zum Längsrand (14) jedes Blechstreifens hergestellt wird und dadurch dass, die Querschnittslänge der Aufkantung (16) dem Abstand (a) der Sicke/Nut (12) entspricht.

2. Verfahren nach Anspruch 1,
- **dadurch gekennzeichnet, dass**
- die Sicke/Nut (12) durch Kaltverformung hergestellt wird.

3. Verfahren nach Anspruch 2,
- **dadurch gekennzeichnet, dass**
- die Sicke/ Nut (12) durch ein Stempel- oder Walzverfahren hergestellt wird.

4. Verfahren nach Anspruch 1,
- **dadurch gekennzeichnet, dass**
- die Sicke/Nut (12) durch Materialabtragung hergestellt wird.

5. Verfahren nach einem der Ansprüche 1 bis 4,
- **dadurch gekennzeichnet, dass**
- die Sicke/Nut (12) ober- und/ oder unterseitig an dem jeweiligen Blechstreifen (10) angebracht wird.

6. Verfahren nach einem der Ansprüche 1 bis 5,
- **dadurch gekennzeichnet, dass**
- die Sicke/ Nut (12) in einem Abstand (a) vom Längsrand (14) des Blechstreifens (10) angebracht wird, der der 3 bis 10-fachen, insbesondere der 2 bis 5-fachen, Stärke des Blechstreifens (10) entspricht.

7. Verfahren nach einem der Ansprüche 1 bis 6,
- **dadurch gekennzeichnet, dass**
- ein Blechstreifen (10) eingesetzt wird, dessen Stärke/Dicke im Bereich von 0,5 bis 3 mm (Millimeter), insbesondere 0,5 bis 2 mm (Millimeter), liegt.

8. Verfahren nach Anspruch 1,
- **dadurch gekennzeichnet, dass**
- die Aufkantung (16) rechtwinklig zur Ebene (E) des Blechstreifens (10) hergestellt wird.

9. Verfahren nach einem der Ansprüche 1 bis 8,
- **dadurch gekennzeichnet, dass**
- der Schweißkopf (18) während des Verfahrens in Längsrichtung (L) beim Schweißvorgang eine oszillierende beziehungsweise pendelnde Bewegung quer zur Längsrichtung (L) durchführt.

10. Verfahren nach einem der Ansprüche 1 bis 9,
- **dadurch gekennzeichnet, dass**
- zum Verschmelzen der aneinander gefügten Aufkantungen (16) ein Schweißbrenner, eine Schweißelektrode oder ein Laserschweißer eingesetzt wird.

11. Verfahren nach einem der Ansprüche 1 bis 10,
- **dadurch gekennzeichnet, dass**
- die benachbarten zu verschweißenden Längsrandbereiche der Blechstreifen (10) in Längsrichtung (L) beabstandet vor der Verschweißposition mit einem vorgegebenen Spaltmaß auseinander gehalten werden und die Aufkantungen (16) unmittelbar vor der Verschweißposition aneinander gedrückt werden.

12. Verfahren nach einem der Ansprüche 1 bis 11,
- **dadurch gekennzeichnet, dass**
- unmittelbar unterhalb und in Kontakt mit den zu verschweißenden Längsrandbereichen der Blechstreifen (10) eine wärmeleitende Materialschicht (20) angeordnet wird.

13. Verfahren nach einem der Ansprüche 1 bis 12,
- **dadurch gekennzeichnet, dass**
- Blechstreifen (10) aus Edelstahl verwendet werden.

14. Verfahren nach einem der Ansprüche 1 bis 13,
- **dadurch gekennzeichnet, dass**
- Blechstreifen (10) verwendet werden, die membranartig ausgebildet sind.

15. Vorrichtung zur Herstellung einer großen Fläche aus miteinander verschweißten Blechstreifen unter Einsatz des Verfahrens nach einem der Ansprüche 1 bis 14, umfassend:
- eine Formeinrichtung (40) zum Herstellen einer Aufkantung (16) im beidseitigen Randbereich eines abgezogenen Blechstreifens (10), - eine Schweißeinrichtung (42) mit Schweißkopf (18), die in Längsrichtung (L) verfahrbar ist und das Verschmelzen von aneinander gefügten Aufkantungen (16) benachbarter Blechstreifen (10) durchführt, **gekennzeichnet durch**
- eine Lagerrolleneinrichtung (32) auf der ein Blechstreifen (10) als Coil abziehbar gelagert ist,
- eine Auflagereinrichtung (34) für den von der Lagerrolleneinrichtung abgezogenen Blechstreifen (10),
- eine erste Abzugseinrichtung (36) für das Abziehen des Blechstreifens (10) von Lagerrolleneinrichtung (32) auf ein vorgegebenes Längenmaß,
- eine weitere Formeinrichtung (38) zum Herstellen der Sicke/ Nut (12) mit einem vorgegebenen Abstand (a) parallel zum Längsrand (14) im beiderseitigen Randbereich eines abgezogenen Blechstreifens (10), - **dadurch gekennzeichnet, dass** die Querschnittslänge der durch die Formeinrichtung (40) zum Herstellen der Aufkantung (16) hergestellten Aufkantung (16) dem Abstand der Sicke/Nut (16) entspricht, und weiter **gekennzeichnet durch**
- eine weitere Abzugseinrichtung, die verbundene Blechstreifen (10) nach Herstellung der Schweißverbindung in Querrichtung jeweils um das Breitenmaß (b) eines Blechstreifens (10) abzieht.

16. Vorrichtung nach Anspruch 15,
- **dadurch gekennzeichnet, dass**
- eine weitere Lagerrolleneinrichtung (44) vorhanden ist, auf die von der weiteren Abzugseinrichtung abgezogene, verschweißte Blechstreifen (10) aufgewickelt werden.

17. Vorrichtung nach Anspruch 15 oder 16,
- **dadurch gekennzeichnet, dass**
- eine Vorspanneinrichtung (46.1, 46.2) vorhanden ist, die die jeweils zwei miteinander zu verschweißenden Blechstreifen (10) während des Verschweißvorgangs unter Vorspannung hält.

18. Vorrichtung nach einem der Ansprüche 15 bis 17,
- **dadurch gekennzeichnet, dass**
- eine an die Schweißeinrichtung (42) gekoppelte Spalterzeugungseinrichtung (48) vorhanden ist, die in Längsrichtung (L) beabstandet vor der Schweißeinrichtung (42) einen definierten Spaltabstand zwischen den zu verschweißenden zwei Blechstreifen (10) erzeugt.

19. Vorrichtung nach einem der Ansprüche 15 bis 18,
- **dadurch gekennzeichnet, dass**
- die Auflagereinrichtung (34) eine Wärmeleitschiene (20), insbesondere aus Kupfer, enthält, die unmittelbar unterhalb der Längsrandbereiche der zu verschweißenden Blechstreifen (10) angeordnet ist und auf der Längsrandbereiche während des Schweißvorgangs gelagert sind.

20. Vorrichtung nach einem der Ansprüche 15 bis 19,
- **dadurch gekennzeichnet, dass**
- der Schweißkopf (18) der in Längsrichtung (L) verfahrbaren Schweißeinrichtung (42) konstruktiv so ausgebildet/ gelagert ist, dass er während des Schweißvorgangs eine oszillierende oder pendelnde Bewegung quer zur Längsrichtung (L) durchführen kann.

21. Vorrichtung nach einem der Ansprüche 15 bis 20,
- **dadurch gekennzeichnet, dass**
- die Schweißeinrichtung (42) zwei gegenüberliegende Anpressrollen (24) aufweist, die die Aufkantungen (16) zweier beabstandeter Blechstreifen (10) vor der Verschweißposition aneinander presst.

22. Vorrichtung nach Anspruch 20,
- **dadurch gekennzeichnet, dass**
- die Schweißeinrichtung (42) einen Exzenterantrieb für die Durchführung der oszillierenden oder pendelnden Bewegung des Schweißkopfes (18) quer zur Längsrichtung (L) während des Schweißvorgangs aufweist.

## Claims

1. A method for welding longitudinal edge regions of sheet-metal strips (10) butting against one another with the following method steps:
- producing an upturn (16) along the respective longitudinal edge (14) of the sheet-metal strip (10),
- joining the upturns (16) of adjacent sheet-metal strips (10) to one another,
- fusing the upturns (16) joined to one another of adjacent sheet-metal strips (10) by means of welding advancing in the longitudinal direction (L) of the sheet-metal strips (10) using a welding head (18), without the use of additional welding material,
- **characterized in that**
- a bead or groove (12) is produced at a specified distance (a) parallel to the longitudinal edge (14) of each sheet-metal strip (10),
- the cross-sectional length of the upturn (16) corresponds substantially to the distance (a) of the bead/groove (12),

2. The method as claimed in claim 1,
- **characterized in that**
- the bead/groove (10) is produced by cold deformation.

3. The method as claimed in claim 2,
- **characterized in that**
- the bead/groove (12) is produced by a stamping or rolling process.

4. The method as claimed in claim 1,
- **characterized in that**
- the bead/groove (12) is produced by material removal.

5. The method as claimed in one of claims 1 to 4,
- **characterized in that**
- the bead/groove (12) is provided on the upper side and/or underside of the respective sheet-metal strip (10).

6. The method as claimed in one of claims 1 to 5,
- **characterized in that**
- the bead/groove (12) is provided at a distance (a) from the longitudinal edge (14) of the sheet-metal strip (10) that corresponds to 3 to 10 times, in particular 2 to 5 times, the thickness of the sheet-metal strip (10).

7. The method as claimed in one of claims 1 to 6,
- **characterized in that**
- a sheet-metal strip (10) of which the thickness lies in the range from 0.5 to 3 mm (millimeters), in particular from 0.5 to 2 mm (millimeters), is used.

8. The method as claimed in claim 1,
- **characterized in that**
- the upturn (16) is produced at right angles to the plane (E) of the sheet-metal strip (10).

9. The method as claimed in one of claims 1 to 8,
- **characterized in that**
- while moving in the longitudinal direction (L) during the welding operation, the welding head (18) carries out an oscillating or pendulous movement transversely to the longitudinal direction (L).

10. The method as claimed in one of claims 1 to 9,
- **characterized in that**
- a welding torch, a welding electrode or a laser welder is used for fusing the upturns (16) joined to one another.

11. The method as claimed in one of claims 1 to 10,
- **characterized in that**
- the adjacent longitudinal edge regions to be welded of the sheet-metal strips (10) are kept apart at a distance in the longitudinal direction (L) before the welding position by a specified gap dimension and the upturns (16) are pressed against one another directly before the welding position.

12. The method as claimed in one of claims 1 to 11,
- **characterized in that**
- a layer of heat-conducting material (20) is arranged directly underneath and in contact with the longitudinal edge regions to be welded of the sheet-metal strips (10).

13. The method as claimed in one of claims 1 to 12,
- **characterized in that**
- sheet-metal strips (10) of high-grade steel are used.

14. The method as claimed in one of claims 1 to 13,
- **characterized in that**
- sheet-metal strips (10) formed in a membrane-like manner are used.

15. A device for producing a large surface from sheet-metal strips welded to one another using the method as claimed in one of claims 1 to 14, comprising:
- a forming device (40) for producing an upturn (16) in the edge region on both sides of a drawn-off sheet-metal strip (10),
- a welding device (42) with a welding head (18), which is movable in the longitudinal direction (L) and carries out the fusing of the upturns (16) joined to one another of adjacent sheet-metal strips (10),
- **characterized in**
- a bearing-roller device (32) on which a sheet-metal strip (10) is mounted as a coil in such a way that it can be drawn off,
- a support device (34) for the sheet-metal strip (10) drawn off from the bearing-roller device,
- a first drawing-off device (36) for drawing off the sheet-metal strip (10) from the bearing-roller device (32) to a specified length dimension,
- a further forming device (38) for producing the bead/groove (12) at a specified distance (a) parallel to the longitudinal edge (14) in the edge region on both sides of a drawn-off sheet-metal strip (10),
- further **characterized in**
- a further drawing-off device, which draws off connected sheet-metal strips (10) after production of the welded connection in the transverse direction in each case by the width dimension (b) of a sheet-metal strip (10).

16. The device as claimed in claim 15,
- **characterized in that**
- there is a further bearing-roller device (44), onto which welded sheet-metal strips (10) drawn off by the further drawing-off device are wound.

17. The device as claimed in claim 15 or 16,
- **characterized in that**
- there is a pretensioning device (46.1, 46.2), which keeps the two sheet-metal strips (10) to be welded to one another in each case under tension during the welding operation.

18. The device as claimed in one of claims 15 to 17,
- **characterized in that**
- there is a gap-creating device (48) coupled to the welding device (42), which creates a defined gap distance between the two sheet-metal strips (10) to be welded at a distance in the longitudinal direction (L) before the welding device (42).

19. The device as claimed in one of claims 15 to 18,
- **characterized in that**
- the support device (34) includes a heat-conducting rail (20), in particular of copper, which is arranged directly underneath the longitudinal edge regions of the sheet-metal strips (10) to be welded and is mounted on the longitudinal edge regions during the welding operation.

20. The device as claimed in one of claims 15 to 19,
- **characterized in that**
- the welding head (18) of the welding device (42) that is movable in the longitudinal direction (L) is structurally formed/mounted in such a way that it carries out an oscillating or pendulous movement transversely to the longitudinal direction (L) during the welding operation.

21. The device as claimed in one of claims 15 to 20,
- **characterized in that**
- the welding device (42) has two opposing pressing rollers (24), which press the upturns (16) of two spaced-apart sheet-metal strips (10) against one another before the welding position.

22. The device as claimed in claim 20,
- **characterized in that**
- the welding device (42) has an eccentric drive for carrying out the oscillating or pendulous movement of the welding head (18) transversely to the longitudinal direction (L) during the welding operation.

## Revendications

1. Procédé de soudage de zones de bords longitudinaux de bandes de tôle (10) en contact bout à bout, comprenant les étapes de procédé suivantes :
- réalisation d'un bord plié (16) le long du bord longitudinal respectif (14) de la bande de tôle (10),
- jonction des bords (16) de bandes de tôle (10) voisines,
- fusion des bords pliés (16) assemblés de bandes de tôle (10) voisines au moyen d'une soudure progressant dans la direction longitudinale (L) des bandes de tôle (10) en utilisant une tête de soudage (18) sans utilisation de matériau de soudage supplémentaire, **caractérisé en ce qu'**un bourrelet ou une rainure est réalisé(e) avec une distance (a) prédéfinie parallèlement au bord longitudinal (14) de chaque bande de tôle et **en ce que** la longueur de section transversale du bord plié (16) correspond à la distance (a) du bourrelet/de la rainure (12).

2. Procédé selon la revendication 1,
- **caractérisé en ce que**
- le bourrelet/la rainure (12) est réalisé(e) par déformation à froid.

3. Procédé selon la revendication 2,
- **caractérisé en ce que**
- le bourrelet/la rainure (12) est réalisé(e) par un procédé de poinçonnage ou de laminage.

4. Procédé selon la revendication 1,
- **caractérisé en ce que**
- le bourrelet/la rainure (12) est réalisé (e) par enlèvement de matière.

5. Procédé selon l'une des revendications 1 à 4,
- **caractérisé en ce que**
- le bourrelet/la rainure (12) est appliqué(e) sur la face supérieure et/ou inférieure de la bande de tôle (10) concernée.

6. Procédé selon l'une des revendications 1 à 5,
- **caractérisé en ce que**
- le bourrelet/la rainure (12) est appliqué(e) à une distance (a) du bord longitudinal (14) de la bande de tôle (10) qui correspond à 3 à 10 fois, en particulier à 2 à 5 fois, l'épaisseur de la bande de tôle (10).

7. Procédé selon l'une des revendications 1 à 6,
- **caractérisé en ce que**
- on utilise une bande de tôle (10) dont la résistance/l'épaisseur est comprise entre 0,5 et 3 mm (millimètres), notamment entre 0,5 et 2 mm (millimètres).

8. Procédé selon la revendication 1,
- **caractérisé en ce que**
- le bord (16) est réalisé perpendiculairement au plan (E) de la bande de tôle (10).

9. Procédé selon l'une des revendications 1 à 8,
- **caractérisé en ce que**
- la tête de soudage (18) effectue un mouvement oscillant dans la direction longitudinale (L) lors du soudage ou pendulaire transversalement à la direction longitudinale (L) pendant le procédé de soudage.

10. Procédé selon l'une des revendications 1 à 9,
- **caractérisé en ce que**
- une torche de soudage, une électrode de soudage ou une soudeuse au laser est utilisée pour fusionner les bords (16) assemblés.

11. Procédé selon l'une des revendications 1 à 10,
- **caractérisé en ce que**
- les zones de bord longitudinal voisines à souder des bandes de tôle (10) sont maintenues espacées dans la direction longitudinale (L) avant la position de soudage avec une distance de fente prédéfinie et les bords pliés (16) sont pressés l'un contre l'autre immédiatement avant la position de soudage.

12. Procédé selon l'une des revendications 1 à 11,
- **caractérisé en ce que**
- une couche de matériau thermo-conducteur (20) est disposée directement en dessous et en contact avec les zones de bord longitudinal à souder des bandes de tôle (10) .

13. Procédé selon l'une des revendications 1 à 12,
- **caractérisé en ce que**
- des bandes de tôle (10) en acier inoxydable sont utilisées.

14. Procédé selon l'une des revendications 1 à 13,
- **caractérisé en ce que**
- on utilise des bandes de tôle (10) qui ont la forme d'une membrane.

15. Dispositif pour la fabrication d'une grande surface à partir de bandes de tôle soudées entre elles en utilisant le procédé selon l'une des revendications 1 à 14, comprenant :
- un dispositif de formage (40) pour réaliser un bord plié (16) dans la zone de bordure des deux côtés d'une bande de tôle (10) étirée,
- un dispositif de soudage (42) avec une tête de soudage (18), qui est apte à être déplacé dans la direction longitudinale (L) et qui effectue la fusion de bords pliés (16) assemblés de bandes de tôle (10) voisines, **caractérisé par**
- un dispositif de rouleaux de support (32) sur lequel une bande de tôle (10) est montée de manière à pouvoir être tirée sous forme de bobine,
- un dispositif de support (34) pour la bande de tôle (10) extraite du dispositif à rouleaux de support,
- un premier dispositif de tirage (36) pour le tirage de la bande de tôle (10) du dispositif à rouleaux de stockage (32) à une dimension longitudinale prédéfinie,
- un autre dispositif de formage (38) pour la fabrication du bourrelet/de la rainure (12) avec une distance prédéfinie (a) parallèlement au bord longitudinal (14) dans la zone de bord des deux côtés d'une bande de tôle (10) retirée,
- **caractérisé en ce que** la longueur de la section transversale du bord plié (16) fabriqué par le dispositif de formage (40) pour fabriquer le bord plié (16) correspond à la distance du bourrelet/de la rainure (16), et **caractérisé en outre par**
- un autre dispositif de tirage, qui tire des bandes de tôle (10) reliées, après la réalisation de l'assemblage soudé, dans la direction transversale, respectivement de la dimension de largeur (b) d'une bande de tôle (10).

16. Dispositif selon la revendication 15,
- **caractérisé en ce que**
- il existe un autre dispositif à rouleaux de support (44) sur lequel sont enroulées les bandes de tôle soudées (10) extraites par ledit autre dispositif de tirage.

17. Dispositif selon la revendication 15 ou 16,
- **caractérisé en ce que**
- un dispositif de précontrainte (46.1, 46.2) est présent, qui maintient sous précontrainte les deux bandes de tôle (10) respectives à souder l'une à l'autre pendant l'opération de soudage.

18. Dispositif selon l'une des revendications 15 à 17,
- **caractérisé en ce que**
- un dispositif (48) de génération de fente est présent, relié au dispositif de soudage (42), qui génère une distance de fente définie entre les deux bandes de tôle (10) à souder, à une certaine distance dans le sens longitudinal (L) devant le dispositif de soudage (42).

19. Dispositif selon l'une des revendications 15 à 18,
- **caractérisé en ce que**
- le dispositif de support (34) contient un rail (20) conducteur de chaleur, en particulier en cuivre, qui est disposé directement en dessous des zones de bord longitudinal des bandes de tôle (10) à souder et sur lequel des zones de bord longitudinal sont appuyées pendant l'opération de soudage.

20. Dispositif selon l'une quelconque des revendications 15 à 19,
- **caractérisé en ce que**
- la tête de soudage (18) du dispositif de soudage (42) déplaçable dans la direction longitudinale (L) est conçue/positionnée de manière à pouvoir effectuer un mouvement oscillant ou pendulaire transversalement à la direction longitudinale (L) pendant l'opération de soudage.

21. Dispositif selon l'une des revendications 15 à 20,
- **caractérisé en ce que**
- le dispositif de soudage (42) comporte deux rouleaux de pression (24) opposés, qui pressent l'un contre l'autre les bords pliés (16) de deux bandes de tôle (10) espacées avant la position de soudage.

22. Dispositif selon la revendication 20,
- **caractérisé en ce que**
- le dispositif de soudage (42) présente un entraînement excentrique pour l'exécution du mouvement oscillant ou pendulaire de la tête de soudage (18) transversalement à la direction longitudinale (L) pendant l'opération de soudage
